Europäisches Patentamt

European Patent Office

Office européen des brevets

(19)

(11) Publication number: **0 333 390**
**A2**

# EUROPEAN PATENT APPLICATION

(12)

(21) Application number: 89302397.8

(22) Date of filing: 13.03.89

(51) Int. Cl.⁴ **B29C 65/08**

(30) Priority: 12.03.88 GB 8805949

(43) Date of publication of application:
20.09.89 Bulletin 89/38

(84) Designated Contracting States:
BE DE ES FR GB IT NL

(71) Applicant: THE MEAD CORPORATION
Mead World Headquarters Courthouse Plaza
Northeast
Dayton Ohio 45463(US)

(72) Inventor: Martin, Claude
150 Rue des Eglantines
F-36130 Deols / BRASSIOUX(FR)

(74) Representative: Hepworth, John Malcolm
J.M. Hepworth & Co. 36 Regent Place
Rugby Warwickshire CV21 2PN(GB)

(54) Ultrasonic heat sealing device.

(57) An ultrasonic horn (H) and anvil block (B) for ultrasonic heatsealing equipment in which the horn has a tip each of whose opposite ends are upwardly inclined relative to a central part of the horn tip so that when the horn is brought into cooperation with a counterpart anvil a gap set between the horn tip and the juxtaposed face of the anvil gradually diminishes from each of said ends towards said central part of the horn tip and in which the anvil has on said juxtaposed face a series of spaced substantially hemispherical projections (18).

EP 0 333 390 A2

# ULTRASONIC HEAT SEALING DEVICE

This invention relates to ultrasonic heatsealing devices and particularly to the ultrasonic horn and the counterpart "anvil" of such devices.

Our co-pending European Patent Application No 0 238 295 relates to a method of forming a multi-unit package in which a blank of paperboard (or similar foldable sheet material) is secured to the top of a container made of a thermoplastics material. The container has opposed outwardly projecting flanges at its top. The blank comprises a top panel and securing strips foldably joined to the side edges of the top panel. The securing strips are folded into contact with the undersides of the container flanges and welded thereto by ultrasonic energy. That publication discloses ultrasonic heatsealing equipment which can be modified by the present invention to give more favourable results.

One aspect of the present invention provides an ultrasonic horn for ultrasonic heatsealing equipment having a tip which is characterised in that each of the opposite ends of the horn tip are upwardly inclined relative to the central part of the horn tip so that when the horn is brought into cooperation with a counterpart anvil a gap set between the horn tip and the juxtaposed face of the anvil gradually diminishes from each of said ends towards said central part of the horn tip.

Another aspect of the present invention provides ultrasonic heatsealing equipment incorporating an ultrasonic horn as defined in the immediately preceding paragraph and an anvil having on said juxtaposed face a series of spaced substantially hemispherical projections. Preferably, the projections are aligned in a row.

Yet another aspect of the invention provides ultrasonic heatsealing equipment having an anvil for cooperation with an ultrasonic horn, which anvil has a face which is juxtaposed a tip of the horn during the ultrasonic process which face is provided with a series of spaced, projections each of which has a tip provided with an arcuate surface.

According to a feature of this aspect of the invention the tip may be spherically convex. Preferably, said projections are hemispherical.

An embodiment of the invention will now be described by way of example with reference to the accompanying drawings in which:-

FIGURE 1 is a schematic view of an ultrasonic horn and counterpart anvil applied to the flange of a thermoplastic cup;

FIGURES 2a-2c are schematic side views showing a package to be subjected to ultrasonic energy passing beneath an ultrasonic horn according to the invention;

FIGURES 3 and 4 are an end view and a side view respectively of an ultrasonic horn according to the invention; and

FIGURES 5a-5c are side, plan and end views respectively of a counterpart anvil according to the invention.

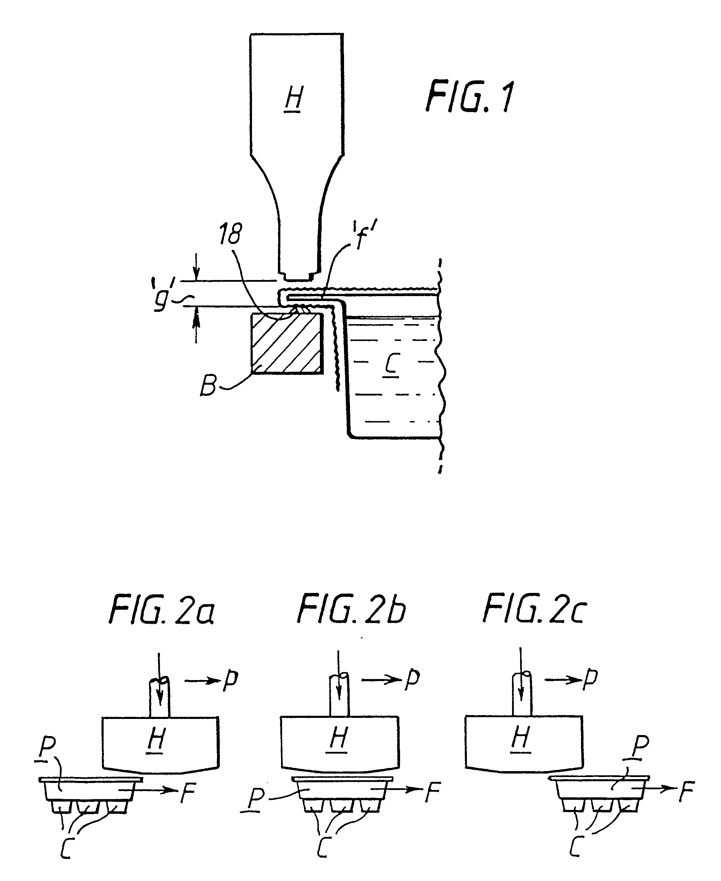

Referring first to Figures 1 to 4 of the drawings, an ultrasonic horn H is disposed in an upright attitude above and alongside a carton feed path F so that a top flange of each container C passes beneath the tip of the horn. A continuous set of metallic counterpart 'anvil' blocks B are mounted for movement in an endless path, each of the blocks being caused to pass alongside the feedpath F in succession beneath the horn tip so that during a working reach they pass beneath and support the container flanges. The container flange 'f', which is overwrapped with a paperboard sheet, passes through the gap 'g' between the horn tip and the top surface of the adjacent counterpart anvil (see Figure 1). Maintaining the correct gap between the horn tip and the anvil is important since too large a gap results in unnecessary expenditure of ultrasonic energy and/or an unsatisfactory weld, and too small a gap can result in damage to the package through excessive friction and/or cause the packaging operation to be too slow for commercial acceptability. Indeed it is known that the area of material in contact between the horn tip and the package where a constant gap is provided is directly related to the pressure to which the package is subjected by the horn during the process.

It has been found impractical to make a proportional variation in the horn pressure to maintain a substantially constant sealing force. Therefore, in order to achieve a uniform sealing force, the gap 'g' is varied. To this purpose, each end of the horn tip is upwardly inclined relative to a central part of the horn tip. Therefore, at the 'infeed' end (in terms of the carton flow) of the horn the gap between the horn tip and the uppermost surface of the juxtaposed anvil gradually diminishes whereas at the opposite 'outfeed' end of the horn tip the gap gradually increases. Thus, in Figure 2a where the contact area S1 is relatively small, the gap 'g' is enlarged whereas in Figure 2b where the contact area S2 is greatest the gap is diminished and in Figure 2c the contact area S3 again, like area S1, is relatively small, therefore requiring an enlarged gap.

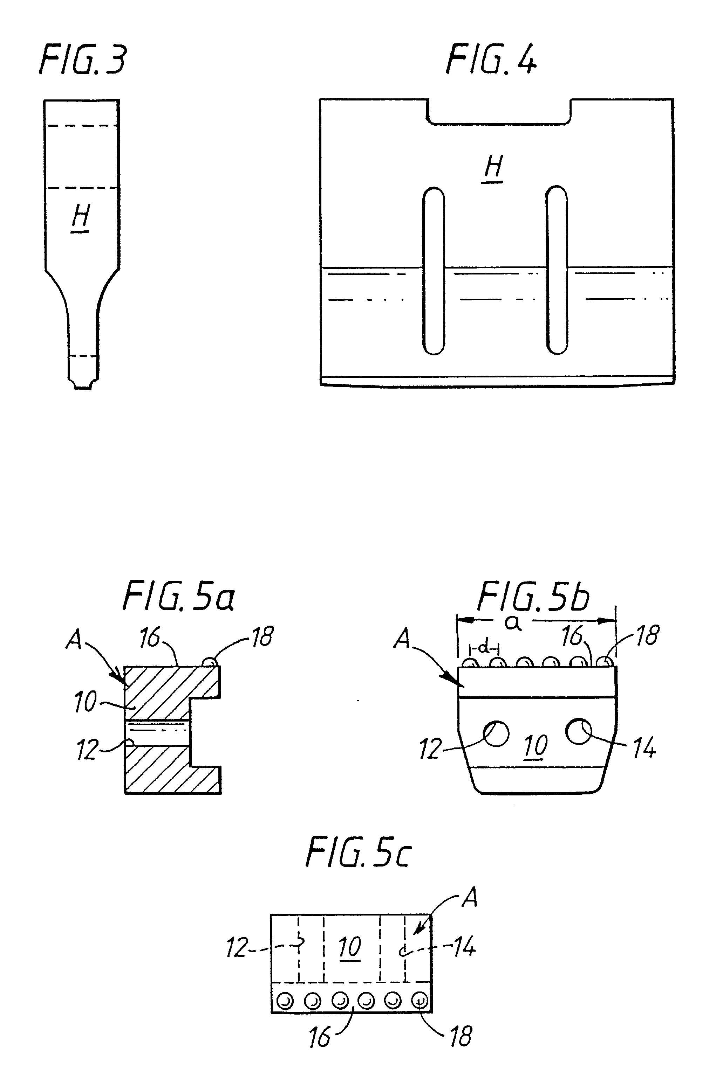

In the example illustrated in Figures 3 and 4 the gap 'g' between the central part of the horn and the uppermost surface of each anvil, i.e. measured to the peak of the hemispherical projections is of the order of 1.2 mm and the maximum additional gap at the 'infeed' and 'outfeed' ends of the horn is 0.3 mm. The additional gap gradually diminishes over a 30 mm length at each end of the horn which is of 175 mm overall length. Also in the example, the downward pressure exerted by the horn was in the range 0.5 Kgf/cm2 to 1.5 Kgf/cm2.

As a result, at the 'infeed' and 'outfeed' ends of the horn, where the area of contact with the package is less than that at the central part of the horn tip, the gap is enlarged to maintain a substantially constant sealing force. Thus, the change in the depth of the gap is of the order of 1% of that length of the horn tip over which the change in depth takes place.

Referring now to Figures 5a-5c, there is shown an anvil A suitable for use in cooperation with an ultrasonic horn as described above but which may also be suitable for use with other forms of horn. The anvil comprises a metallic block 10 having an overall length 'a' of some 30.6 mm. A pair of through bores 12, 14 are provided in a recessed part of the block to facilitate connection of the block to an endless chain. The top surfaces 16 of the block is formed with a series of hemispherical projections 18 arranged in a straight line and spaced 5.3 mm apart as shown by reference 'd' and which, in use, are brought into contact with the paperboard wrapper beneath the container flange (see Figure 1). However, it may be that a projection having a tip which is arcuate in the direction of flow or a projection other than a hemisphere but having a spherically convex tip are satisfactory alternative shapes.

As compared with the transversely ridged top surface of the anvil disclosed in European Patent Application 0 238 295 the present anvil provides more contact surface during the ultrasonic welding process and permits a longer welding time and a higher contact pressure without cutting or perforating the paperboard material and permits an improved distribution of the contact pressure all along the weld length.

## Claims

1. An ultrasonic horn for ultrasonic heatsealing equipment having a tip which is characterised in that each of the opposite ends of the horn tip are upwardly inclined relative to a central part of the horn tip so that when the horn is brought into cooperation with a counterpart anvil a gap set between the horn tip and the juxtaposed face of the anvil gradually diminishes from each of said ends towards said central part of the horn tip.

2. Ultrasonic heatsealing equipment having an ultrasonic horn according to claim 1 and incorporating an anvil having on said juxtaposed face a series of spaced substantially hemispherical projections.

3. Ultrasonic heatsealing equipment according to claim 2 where further said projections are aligned in a row.

4. Ultrasonic heatsealing equipment having an anvil for cooperation with an ultrasonic horn, which anvil has a face which is juxtaposed a tip of the horn during the ultrasonic process which face is provided with a series of spaced, projections each of which has a tip provided with an arcuate surface.

5. Ultrasonic heatsealing equipment according to claim 4 further characterised in that the tip is spherically convex.

6. Ultrasonic heatsealing equipment according to claim 5 further characterised in that said projections are hemispherical.

FIG.1

FIG.2a FIG.2b FIG.2c

FIG.3

FIG.4

*H*

*H*

FIG.5a

A   16   18

10

12

FIG.5b

a

d

A

16   18

12   *10*   14

FIG.5c

A

12   *10*   14

16   18